(19) **Europäisches Patentamt / European Patent Office / Office européen des brevets**

(11) **EP 1 913 479 B1**

(12) **EUROPEAN PATENT SPECIFICATION**

(45) Date of publication and mention
of the grant of the patent:
**02.03.2011 Bulletin 2011/09**

(51) Int Cl.:
***G06F 12/00*** (2006.01)

(21) Application number: **06800555.2**

(22) Date of filing: **28.07.2006**

(86) International application number:
**PCT/US2006/029747**

(87) International publication number:
**WO 2007/016491 (08.02.2007 Gazette 2007/06)**

(54) **CACHE ARCHITECTURE FOR A PROCESSING UNIT PROVIDING REDUCED POWER CONSUMPTION IN CACHE OPERATION**

CACHE-ARCHITEKTUR ZUR EINE VERARBEITUNGSEINHEIT MIT VERRINGERTEM STROMVERBRAUCH IM CACHE-BETRIEB

ARCHITECTURE DE CACHE POUR UNITE DE TRAITEMENT ASSURANT UNE CONSOMMATION D'ENERGIE REDUITE DANS UNE OPERATION DE CACHE

(84) Designated Contracting States:
**AT BE BG CH CY CZ DE DK EE ES FI FR GB GR HU IE IS IT LI LT LU LV MC NL PL PT RO SE SI SK TR**

(30) Priority: **01.08.2005 US 704401 P**

(43) Date of publication of application:
**23.04.2008 Bulletin 2008/17**

(73) Proprietor: **The Board of Governors for Higher Education State of Rhode Island And Providence Plantations Providence, RI 02908 (US)**

(72) Inventor: **YANG, Qing Sauderstown, RI 02874 (US)**

(74) Representative: **Johnstone, Douglas Ian et al Baron Warren Redfern 19 South End Kensington London W8 5BU (GB)**

(56) References cited:
**US-B1- 6 327 671**

• **JUN YANG ET AL: "Energy efficient frequent value data cache design" MICROARCHITECTURE, 2002. (MICRO-35). PROCEEDINGS. 35TH ANNUAL IEEE/ACM INTERNATIONAL SYMPOSIUM ON 18-22 NOV. 2002, PISCATAWAY, NJ, USA,IEEE, 18 November 2002 (2002-11-18), pages 197-207, XP010626991 ISBN: 978-0-7695-1859-6**
• **HENNESSY J.L. ET AL.: 'Computer Architecture A Quantitative Approach', vol. 3RD ED., 2003 pages 398 - 405**

**Description**

BACKGROUND

Energy consumption of computer based equipments has been a general concern of computer designers. This is particularly true for mobile computing devices that are powered by batteries. More particularly, power consumption is a primary concern of conventional design of central processing units (CPUs). This is particularly true for consumer electronics devices such a s MP3 players, MPEG players, cell phones, personal digital assistants (PDAs), laptop computers, and more. On-chip cache memory is the primary source of power consumption since up to 80% of on-chip transistors are devoted to cache memories. Existing technologies such as such as filter cache, frequent value data cache, reconfigurable cache, and data compressions seek to reduce the power consumption of cache memories.

Filter cache technologies employ an unusually small level 1 (L1) cache to perform most of caching activities while using a large level two (L2) cache to reduce penalty caused by high miss rate of such small Ll cache. The approach effectively trades performance for power consumption by filtering cache references. The frequent value data cache technique exploits the data locality property that a few values (4 to 128) are used very frequently by CPU. By storing these values in a register file indexed by a few encoded bits in the cache, they are able to reduce power consumption of cache memories greatly. Reconfigurable cache designs seek to adapt the cache configuration to different applications so that the cache can be better utilized. Data compressions in cache is aimed at reducing required cache size to hold same amount of data or enlarge cache capacity to hold large amount of data. Another approach reduces energy consumption through dynamic zero compression such that a large portion of cached data are zeros. Instead of accessing those zeros in its original form, they use one bit for each zero bytes. With only 2 additional FO4 gate delays for each read access, they are able to reduce total data cache energy by around 26% and instruction cache by around 10%.

Such existing technologies, however, are believed to provide only incremental improvement based on existing cache designs. There remains a need for a cache architecture that requires minimum power consumption.

Article "Energy efficient Frequent Value data Cache design" by Jun Yang et all (Microarchitecture, 2002; MICRO-35; Proceedings; 35th Annual IEEE/ACM International Symposium; pages 197- 207; ISSN: 1072-4451; ISBN: 0-7695-1859-1) concerns how a small number of distinct frequently occurring values can often account for a large portion of memory accesses. The paper purports to demonstrate how this frequent value phenomenon can be exploited in designing a cache that trades off performance with energy efficiency. A design of a frequent value cache is proposed in which storing a frequent value requires few bits as they are stored in encoded form while all other values are stored in unencoded form using 32 bits. The data array is partitioned into two arrays such that if a frequent value is accessed only the first data array is accessed; otherwise an additional cycle is needed to access the second data array.US granted patent US6327671 discloses a data storage facility which provides a remote copy operation that copies data write updates from a primary data store to a remote site by identifying which bytes in a block update have changed and sending only the changed bytes from the primary data store to the remote site. An exclusive-OR (XOR) logic operation is used to identify the changed bytes by XORing the original data block with the changed block. Data compression can then be used on the XOR data block to delete the unchanged bytes, and when the compressed block is sent to the remote site, only the unchanged bytes will be sent, thereby reducing the bandwidth needed between the primary store and the remote site.

SUMMARY OF THE INVENTION

In accordance with an embodiment, the invention provides a cache memory processing system and a corresponding method as claimed in the accompanying claims.

BRIEF DESCRIPTION OF THE DRAWINGS

The following description may be further understood with reference to the accompanying drawings in which:

Figure 1 shows an illustrative diagrammatic view of a circuit in accordance with an embodiment of the invention;
Figure 2 shows a graphical representation of power savings versus array size for a system in accordance with an embodiment of the invention; and
Figure 3 shows a graphical representation of power savings versus array size for a system in accordance with another embodiment of the invention. The drawings are shown for illustrative purposes only.

DETAILED DESCRIPTION OF THE ILLUSTRATED EMBODIMENTS

The present invention provides a cache architecture that caches slight variation of data with negligible overhead.

By changing the form of data to be cached using a simple Exclusive-OR (XOR) function, dramatic power saving is possible because of the data locality property that exists in typical applications. Such locality property is more pronounced for multimedia data and consumer electronics applications. Preliminary evaluation shows that the architecture may reduce power consumption by as much as 80%. Such savings may be converted to consumer benefit of prolonged battery life for electronic devices.

In accordance with various embodiments, systems of the invention perform XOR function of a new cache data with a reference cache data upon each cache read and write. The reference cache data is one of cached data item and is chosen dynamically at run lime. Because of data locality, such XOR computation results in majority of bits in the data cache being zeros. Since XOR is combinational logic and does not pose additional delay when accessing memory, the computation will not increase the CPU cycle time.

As a general example, consider an application for processing Video data. Digital videos are typically represented by at least 24 picture frames per second with each picture frame consisting of a two dimensional array of pixels. Each pixel is typically represented using a 3-4 bytes binary numbers. When a computer processes such picture frames, these binary numbers are read and written through the cache memory. Pixels that are physically close to each other are likely to differ by a few bits. Similarly, audio data exhibit the similar locality property. If 8 pixel words are XORed with one reference word in close proximity, 8 words with mostly zero bits will likely be obtained except for the few bits that actually change.

Additional savings are possible with techniques such as dynamic zero compression. Such large power savings may benefit consumers greatly, providing, for example, more than triple the life of battery for mobile computing devices because 80% of on-chip transistors are used for cache memory. The overhead as result of the design is minimal with only a few XOR gates and Multiplexers, which is less than 1% of the cache logic. The design does not add any performance delay for cache accesses since the transformation is not part of critical path and is done in parallel to normal cache accesses.

## An Implementation for Power Savings.

In a sequence of data being referenced by the CPU, it is very likely that the data differ in a few bits positions while other bit positions remain unchanged or change a little. Continuous functions and variables or multimedia data are examples of such data that usually change the low-order few bits in a sequence of data while high-order bits rarely change.

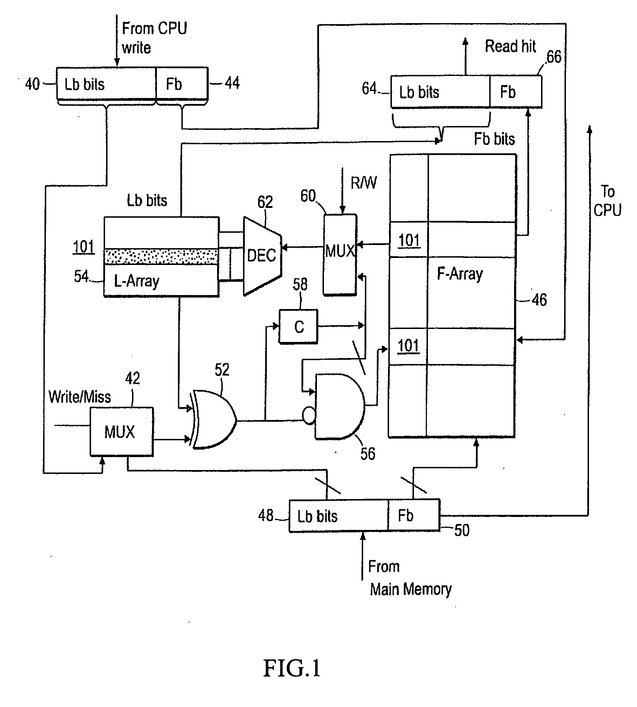

Figure 1 shows a cache architecture in accordance with an embodiment of the invention. The normal data array of a cache memory is divided in two parts. One is called F-array to store frequently changed bits in a word/line. The other array is referred to as L-array to store less frequently changed bits of the word/line. The higher bits (less frequently changed) of data 40 from the CPU are provided to a multiplexer 42 while the lower bits (higher frequently changed) data 44 are provided to an F-array 46. Similarly, the higher bits (less frequently changed) of data 48 from memory are provided to the multiplexer 42 while the lower bits (higher frequently changed) data 50 are provided directly to the CPU.

The multiplexer 42 also receives write / miss input as shown, and the output of the multiplexer 42 is provided to an input of an XOR gate 52. The other input to the XOR gate 52 is provided by an L-array 54. The output of the XOR gate 52 is provided to an inverting put of an AND gate 56 as well as to a counter 58. The output of the counter 58 is provided to a multiplexer 60 as well as to the other input of the XOR gate 56. The multiplexer 60 also receives input from the F-array 46 as well as the read / write signal. The output of the multiplexer 60 is provided to a decoder 62 that is coupled to the L-array 54. The L-array 54 also provides an output to $L_b$ bit data 64 for a read hit, and the $F_b$ bit data 66 for a read hit is provided by the F-array 46.

Let $L_b$ be the width in terms of number of bits in the F-array and let $L_b$ be the width of the L-array. We expect $F_b$ to be much smaller than $L_b$. For example, $F_b$ could be 8 bits and $L_b$ could be 56 bits for a 64 bits word machine. Or alternatively we could have $F_b$ 16 bits and $L_b$ 112 bits for a 16 bytes cache line. The exact sizes of the two arrays should be tuned based on applications and benchmark studies. For the sake of discussion here, let us consider $F_b$=8 and $L_b$=56 bits, respectively. Since the two parts of each data item, frequently changed part and less frequently changed part, are decoupled, we cache data in their original form, i.e., no XOR transformation is done. The XOR function is mainly used to determine the same $L_b$ part commonly shared by many $F_b$ parts that change frequently. In this design, we assume that the frequently changed part is the low-order bits part of a word and the less frequently changed part is the high-order part of a word. The two arrays are associated by using pointers as shown in the figure. The detailed cache operations of the cache architecture are as follows.

**Read Hit:** Upon a CPU read operation and the referenced data item is found in the cache, the index field of the memory address goes through the normal cache decoder to activate one of the items in the F-Array. The pointer field of the activated data item in the F-Array will index one of the items in the L-Array. The referenced data is the concatenation of the two parts from the two arrays.

**Read Miss/Write Miss:** When a miss occurs, the data is loaded from the main memory. While the requested data goes to the CPU directly, write operations to the cache are done in the two arrays in parallel. First, the low-order bits are written into the F-Array using the memory address of the data item. The high order bits part will go to the L-Array. This high-order bits part is first XORed with the entry in the L-Array pointed by the counter C (a circular counter). If the result of the XOR is zero indicating that the high order-bits part of the referenced data item is the same as the L-Array entry pointed to by counter C, then the counter value is entered into the pointer field of the F-Array corresponding to the referenced data item. If the XOR result in a non-zero value, then this non-zero value triggers the counter to increment. The result of the counter points to the next line in the L-Array and another XOR operation is performed. The process continues until a zero result is obtained. The counter value then goes to the pointer field of the corresponding data item in the F-Array. We expect that more than 90% of memory references can find a match in the L-Array. If no zero is found after a complete round of counter values, the new high-order bits value is written into the first available space in the L-Array if there is available space. The corresponding counter value is written in the pointer field of the corresponding location in the F-Array. Otherwise if the L-Array is full, an L-Array miss occurs. The handling of such misses is discussed below.

**Write Hit:** If a write operation hits in the cache, the low-order bits are written in the F-Array in the same way as normal cache memories. The high-order bits part will have to go through the similar process as in a read miss as described above and as shown at the left hand side of Figure 1. As soon as the output of the XOR gate is zero, the value of counter C is written into the pointer field of the written data item in the F-Array. If no zero is found after the counter loops back, the new value can be written into the L-Array if there is space available or an L-Array miss occurs similar to the read miss situation and will be handled in the same way. For write-through caches, the written data from the CPU goes directly to the main memory and bypass the XOR logic. For write-back caches, data concatenation between the two arrays needs to be performed upon write back operations in the similar way as read hits.

When L-Array is full and a new data to be written into the cache does not match any one of the data in the L-Array, an L-Array miss occurs. A replacement needs to be done to make room for the new data. Replacement algorithms such as LRU or MRU can be used. Care should be taken to handle such misses. The distinctive issue with the L-Array replacement is the association between L-Array and F-Array. One entry in the L-Array may be shared by many data items in the F-Array. Replacing an L-Array entry that is shared by many data items in the F-Array will suffer from performance penalty since all the data items associated with the replaced L-Array entry would have to be invalidated or replaced. Alternative replacement algorithms may be used such as the least counter value replacement algorithm. If the L-array size is tuned property, the miss ratio of the L-Array may be controlled well less than 1%.

## Analysis of Energy Savings

The following presents an approximate analysis of energy savings as result of the new cache architecture. Power consumptions in accessing cache memory are attributed primarily to driving word lines, bit lines, output drivers, decoders, and multiplexers. On-chip caches are usually implemented using SRAM that consume energy to keep state. Energy consumption, therefore, may be directly related to number of bits in the cache. With reference to Figure 1 above, in addition to the data array and tag array of normal cache memory, we have extra XOR gates, a counter, and multiplexers. Let $Cs$ be the size of the cache in terms of number of cache lines and $Ws$ be the word size or line size. For simplicity, assume a cache line size to be same as word size. Let $Ls$ be the number of dues in the L-Array and $Lw$ be the width of each line in the L-Array in bits. Then the extra power consumption because of the cache of an embodiment of the invention may be approximately expressed as:

$$P_{extra} = \chi[Lw + 2Lw + \log(Ls)] + \sigma[\log(Ls) + Cs\log(Ls)], \qquad (1)$$

where $\chi$ is an energy coefficient for combinational logic and $\sigma$ for sequential logic. Inside the first parenthesis, we have XOR gates, multiplexers, and the decoder for the L-Array. Inside the second parenthesis, the counter and the pointers in the F-Array are taken into account. The number of data bits in a normal cache is simply $Cs * Ws$ while the number of cache bits in the CEO-cache is $Cs*(Ws - Lw) + Ls*Ws.$

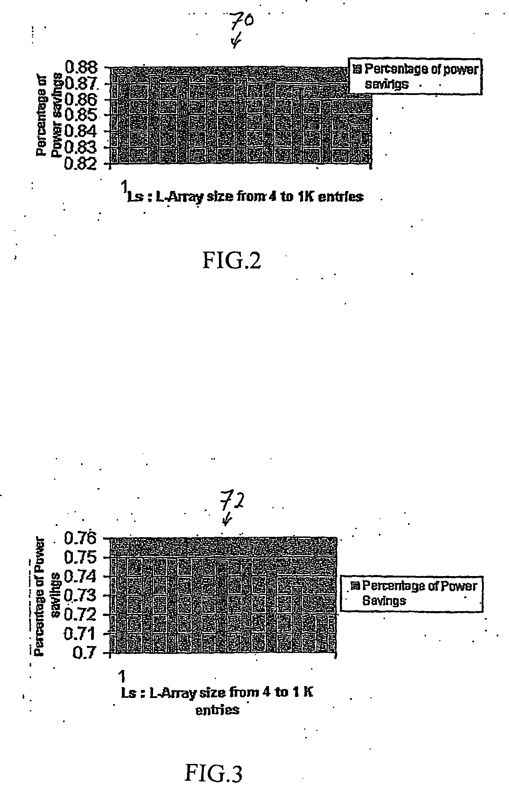

Based on this approximate analysis the percentage of power savings due to the cache design above with $Fb$ = 8 bits are plotted. Figure 2 shows at 70 the percentage savings as a function of L-Array size for 64 bit word machines. Since combination logic consume less power than sequential logic. The values of $\chi$ and $\sigma$ are set to 0.5 and 0.9 respectively. The L-Array sizes are changed from 4 entries to 1 K entries for a 32 K words cache. Conventional research on tag arrays have shown that for this cache size, 16 or 32 entries for the L-Array can achieve the same cache hit ratio as the normal cache. As shown in this figure, over 84% of power savings are obtained for all the L-Array sizes considered. This saving is very significant because it implies that the normal cache memory would consume 5 times more power than our new cache design. Considering that 80% of on-chip transistors are used for cache memory, the overall power saving of the 32-entry L-Array XOR cache of the invention may be as high as 70%. This saving can be converted to consumers' benefit of prolonged battery life of 3.3 times, more than tripled.

Figure 3 shows at 72 similar results for 32 bits word machines. The percentage of power savings ranges from 72% to 75% for different L-Array sizes. These savings are also very significant.

A structure of caching frequently changed bits of data items in normal cache structure (data array) and caching the less frequently changed large portion of data items in a much smaller cache is provided. There is a many-to-one relationship between the frequently changed bit array and less frequently changed data array. Associations between the two arrays are done using pointers or associative search. Referenced data are provided by concatenations of selected item in both arrays. Power reduction are possible because of much smaller cache for large portion of a data item and smaller number of bits in the original array. Tag arrays show similar locality property with majority of high order-bits being the same. Similar power savings are possible by the same two part cache: low-order bit tag array and smaller high-order-bit tag array.

Those skilled in the art will appreciate that numerous modifications and variations may be made to the above disclosed embodiments.

Array entry pointed to by counter C, then the counter value is entered into the pointer field of the F-Array corresponding to the referenced data item. If the XOR result in a non-zero value, then this non-zero value triggers the counter to increment. The result of the counter points to the next line in the L-Array and another XOR operation is performed. The process continues until a zero result is obtained. The counter value then goes to the pointer field of the corresponding data item in the F-Array. We expect that more than 90% of memory references can find a match in the L-Array. If no zero is found after a complete round of counter values, the new high-order bits value is written into the first available space in the L-Array if there is available space. The corresponding counter value is written in the pointer field of the corresponding location in the F-Array. Otherwise if the L-Array is full, an L-Array miss occurs. The handling of such misses is discussed below.

**Write Hit:** If a write operation hits in the cache, the low-order bits are written in the F-Array in the same way as normal cache memories. The high-order bits part will have to go through the similar process as in a read miss as described above and as shown at the left hand side of Figure 2. As soon as the output of the XOR gate is zero, the value of counter C is written into the pointer field of the written data item in the F-Array. If no zero is found after the counter loops back, the new value can be written into the L-Array if there is space available or an L-Array miss occurs similar to the read miss situation and will be handled in the same way. For write-through caches, the written data from the CPU goes directly to the main memory and bypass the XOR logic. For write-back caches, data concatenation between the two arrays needs to be performed upon write back operations in the similar way as read hits.

When L-Array is full and a new data to be written into the cache does not match any one of the data in the L-Array, an L-Array miss occurs. A replacement needs to be done to make room for the new data. Replacement algorithms such as LRU or MRU can be used. Care should be taken to handle such misses. The distinctive issue with the L-Array replacement is the association between L-Array and F-Array. One entry in the L-Array may be shared by many data items in the F-Array. Replacing an L-Array entry that is shared by many data items in the F-Array will suffer from performance penalty since all the data items associated with the replaced L-Array entry would have to be invalidated or replaced. Alternative replacement algorithms may be used such as the least counter value replacement algorithm. If the L-array size is tuned property, the miss ratio of the L-Array may be controlled well less than 1%.

## 4. Analysis of Energy Savings

The following presents an approximate analysis of energy savings as result of the new cache architecture. Power consumptions in accessing cache memory are attributed primarily to driving word lines, bit lines, output drivers, decoders, and multiplexers. On-chip caches are usually implemented using SRAM that consume energy to keep state. Energy consumption, therefore, may be directly related to number of bits in the cache. With reference to Figure 2 above, in addition to the data array and tag array of normal cache memory, we have extra XOR gates, a counter, and multiplexers. Let $Cs$ be the size of the cache in terms of number of cache lines and $Ws$ be the word size or line size. For simplicity, assume a cache line size to be same as word size. Let $Ls$ be the number of dues in the L-Array and Lw be the width of each line in the L-Array in bits. Then the extra power consumption because of the cache of an embodiment of the invention may be approximately expressed as:

$$P_{extra} = \chi[Lw + 2Lw + \log(Ls)] + \sigma[\log(Ls) + Cs\log(Ls)], \qquad (1)$$

where $\chi$ is an energy coefficient for combinational logic and $\sigma$ for sequential logic. Inside the first parenthesis, we have XOR gates, multiplexers, and the decoder for the L-Array. Inside the second parenthesis, the counter and the pointers in the F-Array are taken into account. The number of data bits in a normal cache is simply $Cs*Ws$ while the number of cache bits in the CEO-cache is $Cs*(Ws - Lw) + Ls*Ws$.

Based on this approximate analysis the percentage of power savings due to the cache design above with $Fb$ = 8 bits are plotted. Figure 3 shows at 70 the percentage savings as a function of L-Array size for 64 bit word machines. Since combination logic consume less power than sequential logic. The values of $\chi$ and $\sigma$ are set to 0.5 and 0.9 respectively. The L-Array sizes are changed from 4 entries to 1 K entries for a 32 K words cache. Conventional research on tag arrays have shown that for this cache size, 16 or 32 entries for the L-Array can achieve the same cache hit ratio as the normal cache. As shown in this figure, over 84% of power savings are obtained for all the L-Array sizes considered. This saving is very significant because it implies that the normal cache memory would consume 5 times more power than our new cache design. Considering that 80% of on-chip transistors are used for cache memory, the overall power saving of the 32-entry L-Array XOR cache of the invention may be as high as 70%. This saving can be converted to consumers' benefit of prolonged battery life of 3.3 times, more than tripled.

Figure 4 shows at 72 similar results for 32 bits word machines. The percentage of power savings ranges from 72% to 75% for different L-Array sizes. These savings are also very significant.

In various embodiments, therefore, there is original data in the cache that is sparsely scattered across the data cache. This original data is used to carry out XOR transformations of other cached data. The original data lines, referred to O-lines, may be statically determined at design time for simplicity or dynamically determined at rum time to maximize number of 0 bits in cache. The majority zero bits in the cache allow easy compression, power reduction, indexing, and encoding etc. One possible implementation of a system of the invention is to use one zero bit to represent a zero byte realizing 8:1 reduction. A structure of caching frequently changed bits of data items in normal cache structure (data array) and caching the less frequently changed large portion of data items in a much smaller cache is provided. There is a many-to- one relationship between the frequently changed bit array and less frequently changed data array. Associations between the two arrays are done using pointers or associative search. Referenced data are provided by concatenations of selected item in both arrays. Power reduction are possible because of much smaller cache for large portion of a data item and smaller number of bits in the original array. Tag arrays show similar locality property with majority of high order-bits being the same. Similar power savings are possible by the same two part cache: low-order bit tag array and smaller high-order-bit tag array.

Those skilled in the art will appreciate that numerous modifications and variations may be made to the above disclosed embodiments.

## Claims

1. A cache memory processing system coupled to a main memory (14) and a processing unit (10), said cache memory processing system including:

   an input for receiving input data that includes at least one low order input bit (44, 50) and at least one high order input bit (40, 48),

   **characterised by**:

   a low order bit data path for processing said at least one low order input bit (44, 50) and providing at least one low order output bit (66);
   a high order bit data path for processing said at least one high order input bit (40, 48) and providing at least one high order output bit (64), said high order bit data path including at least one exclusive OR gate (52) for performing an XOR function on the at least one high order input bit and data from an array (54) of less frequently changed data bits, said less frequently changed data bits being cached copies of said at least one high order input bit (40, 48) that are commonly shared by many of said at least one low order input bit (44, 50) such that a difference between the at least one high order input bit (40, 48) and the data from the array of less frequently changed data bits will be identified by the exclusive OR gate; and
   an output for providing the at least one low order output bit (66) and the at least one high order output bit (64).

2. The cache memory processing system as claimed in claim 1, wherein said high order bit data path includes a multiplexer (42).

3. The cache memory processing system as claimed in claim 1, wherein said input is coupled to the central processing unit (10) and the output is coupled to the main memory (14).

4. The cache memory processing system as claimed in claim 1 , wherein said input is coupled to the main memory (14) and the output is coupled to the central processing unit (10).

5. The cache memory processing system as claimed in claim 1, wherein said array of less frequently changing data bits provides the at least one high order output bit (64) for a read hit.

6. The cache memory processing system as claimed in claim 1, wherein said low order bit data path includes an array of frequently changing data bits.

7. The cache memory processing system as claimed in claim 1, wherein said high order bit data path receives at least one high order input bit from at least two data input words.

8. The cache memory processing system as claimed in claim 1, wherein said system includes a first high order bit data path from a processing unit to the main memory (14), and a second high order bit data path from the main memory (14) to the processing system.

9. The cache memory processing system as claimed in claim 1, wherein:

said input data includes at least 32 bits, at least two of which are low order input bits and at least two of which are high order input bit;
said low order bit data path processes said at least two low order input bits and providing at least two low order output bits;
said high order bit data path processes said at least two high order input bits and provides at least two high order output bits; and
said output provides output data including at least 32 bits.

10. A method of processing cache memory in a cache memory processing system coupled to a main memory (14) and a processing unit (10), said method including the step of
receiving input data that includes at least one low order input bit (44, 50) and at least one high order input bit (40, 48),
**characterised by** the steps of:

processing said at least one low order input bit (44, 50) and providing at least one low order output bit (66) using a low order bit data path;
processing said at least one high order input bit (40, 48) and providing at least one high order output bit (64) using a high order bit data path, said high order bit data path including at least one exclusive OR gate (52) for performing an XOR function on the at least one high order input bit and data from an array (54) of less frequently changed data bit, said less frenquently changed data bits being cached copies of said at least one high order input bits (40, 48) that are commonly shared by many of said at least one low order input (44, 50), such that a difference between the at least one high order input bit (40, 48) and the data from the array of less frequently changed data bits will be identified by the exclusive OR gate; and
providing the at least one low order output bit (66) and the at least one high order output bit (64).

11. The method as claimed in claim 10, wherein said high order bit data path includes a multiplexer.

**Patentansprüche**

1. Cachespeicherverarbeitungssystem, das mit einem Hauptspeicher (14) und einer Verarbeitungseinheit (10) verbunden ist, wobei das Cachespeicherverarbeitungssystem aufweist:

einen Eingang zum Aufnehmen von Eingangsdaten, die mindestens ein Eingangsbit (44, 50) niedriger Ordnung und mindestens ein Eingangsbit (40, 48) hoher Ordnung aufweisen,

**gekennzeichnet durch**
einen Pfad für Bitdaten niedriger Ordnung zum Verarbeiten des mindestens einen Eingangsbit (44, 50) niedriger Ordnung und zum Bereitstellen mindestens eines Ausgangsbit (66) niedriger Ordnung,
einen Pfad für Bitdaten hoher Ordnung zum Verarbeiten des mindestens einen Eingangsbit (40, 48) hoher Ordnung und zum Bereitstellen mindestens eines Ausgangsbit (64) hoher Ordnung, wobei der Pfad für Bitdaten hoher Ordnung mindestens ein Exklusiv-OR-Gatter (52) zum Anwenden einer XOR-Funktion auf das mindestens eine Eingangsbit hoher Ordnung und auf Daten von einem Array (54) aus weniger häufig geänderten Datenbits aufweist, wobei die weniger häufig geänderten Datenbits gecachte Kopien des mindestens einen Eingangsbit (40, 48) hoher Ordnung sind, die gemeinsam von verschiedenen des mindestens einen Eingangsbit (44, 50) niedriger Ordnung verwendet werden, so dass eine Differenz zwischen dem mindestens einen Eingangsbit (40, 48) hoher Ordnung und den Daten aus dem Array aus weniger häufig geänderten Datenbits von dem Exklusiv-OR-Gatter identifiziert wird, und einem Ausgang zum Bereitstellen des mindestens einen Ausgangsbit (66) niedriger Ordnung und des mindestens einen Ausgangsbit (64) hoher Ordnung.

2. Cachespeicherverarbeitungssystem nach Anspruch 1, wobei der Pfad für Bitdaten hoher Ordnung einen Multiplexer (42) aufweist.

3. Cachespeicherverarbeitungssystem nach Anspruch 1, wobei der Eingang mit der zentralen Verarbeitungseinheit (10) verbunden ist und der Ausgang mit dem Hauptspeicher (14) verbunden ist.

4. Cacheverarbeitungsspeichersystem nach Anspruch 1, wobei der Eingang mit dem Hauptspeicher (14) verbunden ist und der Ausgang mit der zentralen Verarbeitungseinheit (10) verbunden ist.

5. Cacheverarbeitungsspeichersystem nach Anspruch 1, wobei das Array aus sich weniger häufig ändernden Datenbits das mindestens eine Ausgangsbit (64) hoher Ordnung für einen Lesezugriff bereitstellt.

6. Cachespeicherverarbeitungssystem nach Anspruch 1, wobei der Pfad für Bitdaten niedriger Ordnung ein Array aus sich häufig ändernden Datenbits aufweist.

7. Cachespeicherverarbeitungssystem nach Anspruch 1, wobei der Pfad für Bitdaten hoher Ordnung mindestens ein Eingangsbit hoher Ordnung von mindestens zwei Dateneingangsworten empfängt.

8. Cachespeicherverarbeitungssystem nach Anspruch 1, wobei das System einen Pfad für Bitdaten hoher Ordnung von einer Verarbeitungseinheit zu dem Hauptspeicher (14) aufweist und einen zweiten Pfad für Bitdaten hoher Ordnung von dem Hauptspeicher (14) zu dem Verarbeitungssystem.

9. Cachespeicherverarbeitungssystem nach Anspruch 1, wobei:

   die Eingangsdaten mindestens 32 Bits aufweisen, von denen mindestens zwei Eingangsbits niedriger Ordnung sind und mindestens zwei Eingangsbits hoher Ordnung sind,
   der Pfad für Bitdaten niedriger Ordnung die mindestens zwei Eingangsbits niedriger Ordnung verarbeitet und mindestens zwei Ausgangsbits niedriger Ordnung bereitstellt,
   der Pfad für Bitdaten hoher Ordnung die mindestens zwei Eingangsbits hoher Ordnung verarbeitet und mindestens zwei Ausgangsbits hoher Ordnung bereitstellt und
   der Ausgang Ausgangsdaten einschließlich mindestens 32 Bits bereitstellt.

10. Verfahren zum Verarbeiten eines Cachespeichers in einem Cachespeicherverarbeitungssystem, das mit einem Hauptspeicher (14) und einer Verarbeitungseinheit (10) verbunden ist, wobei das Verfahren den Schritt aufweist:

   Empfangen von Eingangsdaten, die mindestens ein Eingangsbit (54, 50) niedriger Ordnung und mindestens ein Eingangsbit (40, 48) hoher Ordnung aufweisen, **gekennzeichnet durch** die Schritte:

   Verarbeiten des mindestens einen Eingangsbit (44, 50) niedriger Ordnung und Bereitstellen mindestens eines Ausgangsbits (66) niedriger Ordnung, wobei der Pfad für Bitdaten niedriger Ordnung verwendet wird, Verarbeiten des mindestens einen Eingangsbit (40, 48) hoher Ordnung und Bereitstelllten mindestens eines Ausgangsbit (64) hoher Ordnung, wobei ein Pfad für Bitdaten hoher Ordnung verwendet wird, wobei der Pfad für Bitdaten hoher Ordnung mindestens ein Exklusiv-OR-Gatter (52) zum Anwenden einer XOR-Funktion auf das mindestens eine Eingangsbit hoher Ordnung und auf Daten aus einem Array (54) aus weniger häufig geänderten Datenbits aufweist, wobei die weniger häufig geänderten Datenbits gecachte Kopien des mindestens einen Eingangsbits (40, 48) hoher Ordnung sind, die gemeinsam von verschiedenen des mindestens einen Eingangsbit (44, 50) niedriger Ordnung verwendet werden, so dass eine Differenz zwischen dem mindestens einen Eingangsbit (40, 48) hoher Ordnung und den Daten aus dem Array aus weniger häufig geänderten Datenbits von dem Exklusiv-OR-Gatter identifiziert wird, und

Bereitstellen des mindestens einen Ausgangsbit (66) niedriger Ordnung und des mindestens einen Ausgangsbit (64) hoher Ordnung.

**11.** Verfahren nach Anspruch 10, wobei der Pfad für Bitdaten hoher Ordnung einen Multiplexer aufweist.

## Revendications

**1.** Système de traitement de mémoire cache couplé à une mémoire principale (14) et unité de traitement (10), ledit système de traitement de mémoire cache comportant :

une entrée pour recevoir des données d'entrée qui comprennent au moins un bit d'entrée de faible poids (44, 50) et au moins un bit d'entrée de poids fort (40, 48),

**caractérisé par** :

un trajet de données de bit de faible poids pour traiter ledit au moins un bit d'entrée de faible poids (44, 50) et délivrer au moins un bit de sortie de faible poids (66) ;
un trajet de données de bit de poids fort pour traiter ledit au moins un bit d'entrée de poids fort (40, 48) et délivrer au moins un bit de sortie de poids fort (64), ledit trajet de données de bit de poids fort comprenant au moins une porte OU-exclusif (52) pour effectuer une fonction OU-exclusif sur le au moins 1 bit d'entrée de poids fort et les données provenant d'un réseau (54) de bits de données modifiés moins fréquemment, lesdits bits de données modifiés moins fréquemment étant des copies cache dudit au moins un bit d'entrée de poids fort (40, 48) qui sont partagés en commun par la plupart desdits au moins un bit d'entrée de poids faible (44, 50) de sorte qu'une différence entre le au moins un bit d'entrée de poids fort (40, 48) et les données provenant du réseau de bits de données modifiés moins fréquemment sera identifiée par la porte OU-exclusif ; et
une sortie pour délivrer le au moins un bit de sortie de faible poids (66) et le au moins un bit de sortie de poids fort (64).

**2.** Système de traitement de mémoire cache selon la revendication 1, dans lequel ledit trajet de données de bit de poids fort comprend un multiplexeur (42).

**3.** Système de traitement de mémoire cache selon la revendication 1, dans lequel ladite entrée est couplée à l'unité de traitement centrale (10) et la sortie est couplée à la mémoire principale (14).

**4.** Système de traitement de mémoire cache selon la revendication 1, dans lequel ladite entrée est couplée à la mémoire principale (14) et la sortie est couplée à l'unité de traitement centrale (10).

**5.** Système de traitement de mémoire cache selon la revendication 1, dans lequel ledit réseau de bits de données modifiés moins fréquemment délivre le au moins un bit de sortie de poids fort (64) pour un succès de lecture.

**6.** Système de traitement de mémoire cache selon la revendication 1, dans lequel ledit trajet de données de bit de faible poids comprend un réseau de bits de données fréquemment modifiés.

**7.** Système de traitement de mémoire cache selon la revendication 1, dans lequel ledit trajet de données de bit de poids fort reçoit au moins un bit d'entrée de poids fort d'au moins deux mots d'entrée de données.

**8.** Système de traitement de mémoire cache selon la revendication 1, dans lequel ledit système comprend un premier trajet de données de bit de poids fort provenant d'une unité de traitement à la mémoire principale (14), et un second trajet de données de bit de poids fort provenant de la mémoire principale (14) au système de traitement.

**9.** Système de traitement de mémoire cache selon la revendication 1, dans lequel :

lesdites données d'entrée comprennent au moins 32 bits, dont au moins deux sont des bits d'entrée de faible poids et dont au moins deux sont des bits d'entrée de poids fort ;
ledit trajet de données de bit de faible poids traite lesdits au moins deux bits d'entrée de poids faible et délivre au moins deux bits de sortie de poids faible ;
ledit trajet de données de bit de poids fort traite lesdits au moins deux bits d'entrée de poids fort et délivre au moins deux bits de sortie de poids fort ; et

ladite sortie délivre des données de sortie comprenant au moins 32 bits.

10. Procédé de traitement de mémoire cache dans un système de traitement de mémoire cache couplé à une mémoire principale (14) et unité de traitement (10), ledit procédé comportant l'étape consistant à :

recevoir les données d'entrée qui comprennent au moins un bit d'entrée de poids faible (44, 50) et au moins un bit d'entrée de poids fort (40, 48),

**caractérisé par** les étapes consistant à :

traiter ledit au moins un bit d'entrée de poids fort (44, 50) et délivrer au moins un bit de sortie de poids faible (66) en utilisant un trajet de données de bit de poids faible ;

traiter ledit au moins un bit d'entrée de poids fort (40, 48) et délivrer au moins un bit de sortie de poids fort (64) en utilisant un trajet de données de bit de poids fort, ledit trajet de données de bit de poids fort comprenant au moins une porte OU-exclusif (52) pour effectuer une fonction OU-exclusif sur le au moins un bit d'entrée de poids fort et les données provenant d'un réseau (54) de bits de données modifiés moins fréquemment, lesdits bits de données modifiés moins fréquemment étant des copies cache desdits au moins un bit d'entrée de poids fort (40, 48) qui sont communément partagées par la plupart desdits au moins un bit d'entrée de poids faible (44, 50), de sorte qu'une différence entre le au moins un bit d'entrée de poids fort (40, 48) et les données provenant du réseau de bits de données modifiés moins fréquemment sera identifiée par la porte OU-exclusif ; et délivrer le au moins un bit de sortie de faible poids (66) et le au moins un bit de sortie de poids fort (64) .

11. Procédé selon la revendication 10, dans lequel ledit trajet de données de bit de poids fort comprend un multiplexeur.

FIG.1

70

Percentage of power savings

1 Ls : L-Array size from 4 to 1K entries

FIG.2

72

Percentage of Power Savings

1 Ls : L-Array size from 4 to 1 K entries

FIG.3

## REFERENCES CITED IN THE DESCRIPTION

**Patent documents cited in the description**

- US 6327671 B

**Non-patent literature cited in the description**

- Energy efficient Frequent Value data Cache design. **Jun Yang.** Microarchitecture, 2002; MICRO-35; Proceedings; 35th Annual IEEE/ACM International Symposium. 197-207